# EUROPÄISCHE PATENTSCHRIFT

(11) **EP 3 023 037 B1**
(45) Veröffentlichungstag und Bekanntmachung des Hinweises auf die Patenterteilung: **10.04.2019**
(21) Anmeldenummer: 15192488.3
(22) Anmeldetag: 02.11.2015
(51) Int. Cl.: A47J 31/44

(54) **VORRICHTUNG UND VERFAHREN ZUM ERZEUGEN VON MILCHSCHAUM**
DEVICE AND METHOD FOR GENERATING MILK FOAM
DISPOSITIF ET PROCÉDÉ DE PRODUCTION DE MOUSSE DE LAIT

(30) Priorität: 18.11.2014 DE 102014223550
(43) Veröffentlichungstag der Anmeldung: 25.05.2016
(73) Patentinhaber: FRANKE Kaffeemaschinen AG, 4663 Aarburg (CH)
(72) Erfinder: Vetterli, Heinz, 8855 Wangen (CH)
(74) Vertreter: Lemcke, Brommer & Partner Patentanwälte Partnerschaft mbB

(56) Entgegenhaltungen:
- EP-A1- 0 077 652
- EP-A1- 2 042 063
- DE-A1-102011 108 810

## Beschreibung

Die Erfindung betrifft eine Vorrichtung zum Erzeugen von Milchschaum gemäß Oberbegriff des Anspruchs 1 sowie ein Verfahren zum Erzeugen von Milchschaum gemäß Anspruch 10.

Aufgrund der großen Beliebtheit von Kaffee-Milch-Mischgetränken finden Vorrichtungen zum Aufschäumen von Milch eine immer breitere Verwendung. Hierbei bestehen insbesondere in der Gastronomie hohe Anforderungen an die Qualität des erzeugten Schaums. Zur Erzeugung von Milchschaum sind mehrere Verfahren bekannt:
Aus EP 0 626 148 A1 ist ein heizbarer Milchbehälter bekannt, mit einem Widerstandsdurchlasselement zum Aufschäumen von Milch. Das Widerstandsdurchlasselement besteht aus einem stabförmigen Element und aus einem an dessen Umfang vorgesehenen lamellenartigen Aufbau, der einen Labyrinthdurchlass bildet, durch welchen Milch gepresst wird. Am Umfang des stabförmigen Elements sind ringförmige Lamellen mit ungleichmäßig verteilten Aussparungen in gleichem Abstand zueinander eingearbeitet. Durch das Widerstandsdurchlasselement erfolgt eine mehrfache Be- und Entschleunigung des Milch-Luftgemischs, somit eine mehrfache Druckerhöhung und Druckerniedrigung sowie eine turbulente Vermischung.

Aus EP 0 485 350 A1 ist es bekannt, warmen Milchschaum zu erzeugen, indem Milch mittels einer Pumpe aus einem Behältnis gefördert wird, Luft zugeführt wird und anschließend bei Bedarf eine Erwärmung des Milchschaums in einem Durchlauferhitzer erfolgt. In der Auslassleitung hinter der Pumpe befindet sich eine Querschnittsverjüngung, welche zu einer Druckerhöhung führt. Die Querschnittsverjüngung wird durch ein in der der Auslassleitung angeordnetes, stabförmiges Element gebildet, das sich bis in den Durchlauferhitzer erstrecken kann.

Aus der WO 2008/083941 A1 ist bekannt, Milch mittels einer Pumpe zu einer Drossel zu fördern und den Milchschaum anschließend wahlweise zur Ausgabe von kaltem Milchschaum direkt oder zur Ausgabe von warmem Milchschaum über einen Durchlauferhitzer zu einem Auslass zu fördern.

Aus EP 2 298 142 A1 ist bekannt, die Qualität des Milchschaums durch Verwenden eines intermittierenden Luftventils zu erhöhen.

Bei den letztgenannten Vorrichtungen erfolgt eine Druckerhöhung mittels einer Drossel. Eine Drossel bzw. Drosselstelle wird durch eine Querschnittsverringerung und gegebenenfalls eine anschließende Querschnittserweiterung in der Auslassleitung hinter der Pumpe gebildet.

Die EP 2 042 063 A1 offenbart eine Anordnung zur Erzeugung von Milchschaum, die mit einer Milchzufuhrleitung, einer Pumpe zum Fördern der Milch, zumindest einem Mittel zum Erhitzen der Milch sowie einem Mischelement zum Vermischen der Milch mit der als Aufschäummedium dienenden Luft versehen ist. Die Milch wird zuerst erhitzt und danach wird der Milch die Luft zwangsweise zugeführt. Anschließend wird das Milch-Luft Gemisch einem Mischabschnitt des Mischelements zugeführt, wo es zur Erzeugung des Milchschaums mehrfach umgelenkt und/oder aufgeteilt wird.

Der vorliegenden Erfindung liegt die Aufgabe zugrunde, die vorbekannten Verfahren und Vorrichtungen zur Erzeugung von Milchschaum weiterzubilden.

Gelöst ist diese Aufgabe durch eine Vorrichtung zum Erzeugen von Milchschaum gemäß Anspruch 1 und durch ein Verfahren zum Erzeugen von Milchschaum gemäß Anspruch 10.

Vorteilhafte Ausgestaltungen der erfindungsgemäßen Vorrichtung finden sich in den Ansprüchen 2 bis 9. Vorteilhafte Ausgestaltungen des erfindungsgemäßen Verfahrens finden sich in den Ansprüchen 11 bis 13.

Die erfindungsgemäße Vorrichtung zum Erzeugen von Milchschaum weist eine Pumpe zum Fördern von Milch aus einem Behältnis, einen Lufteinlass und mindestens ein Druckerhöhungselement auf. Das Druckerhöhungselement ist stromabwärts der Pumpe angeordnet. Der Lufteinlass ist stromaufwärts des Druckerhöhungselements angeordnet. Das Druckerhöhungselement ist als Mischelement ausgebildet, wobei das Mischelement eine sich in Durchflussrichtung nicht verringernde Durchfluss-Querschnittsfläche aufweist.

Wesentlich ist, dass der Lufteinlass saugseitig der Pumpe angeordnet ist, und dass die Durchfluss-Querschnittsfläche eingangsseitig zumindest dem Leitungsquerschnitt einer zwischen Pumpe und Mischelement angeordneten Verbindungsleitung entspricht.

Auch bei der erfindungsgemäßen Vorrichtung erfolgt eine Druckerhöhung durch das Mischelement, so dass stromaufwärts des Mischelements ein höherer Druck vorliegt, verglichen mit dem Druck stromabwärts des Mischelements. Das Mischelement stellt somit ein alternatives Druckerhöhungselement zu der vorbekannten Verwendung einer Drossel oder eines Widerstandsdurchlasselements, welches einen Labyrinthdurchlass ausbildet, dar. Hierdurch ergeben sich trotz der vergleichbaren Funktion als Druckerhöhungselement vorteilhafte technische Unterschiede in der Wirkungsweise:
Das Mischelement bewirkt eine Durchmischung des durch das Mischelement hindurchtretenden Fluidstroms, ohne dass eine Verringerung der Durchfluss-Querschnittsfläche vorgesehen ist. Im Vergleich zu einer Drossel oder einem Labyrinthdurchlass mit mehrfach sich ändernden Durchfluss-Querschnittsflächen erfolgt bei dem Mischelement ein laminarer oder jedenfalls erheblich geringer turbulenter Durchfluss verglichen mit einer Drossel oder dem vorbeschriebenen Labyrinthdurchlass.

Es wird daher eine geringere Abhängigkeit von der Konsistenz des Fluids, beispielsweise von der Temperatur der Milch oder der Dichte der Milch aufgrund variierenden Fettgehalts, erzielt. Im Ergebnis kann eine beständigere Schaumqualität auch bei variierender Temperatur und/oder Zusammensetzung der verwendeten Milch erzielt werden.

Grundsätzlich ergibt sich weiterhin der Vorteil, dass verglichen mit den vorbekannten Druckerhöhungselementen eine bessere Durchmischung der Milch/Luftemulsion bei gleichem Druckabfall erzielt werden kann.

Weiterhin ist aufgrund der konstanten oder sich erweiternden Durchfluss-Querschnittsfläche die Gefahr eines Anhaftens von Flüssigkeitsresten an hervorstehenden Lamellen oder Drosselblenden bzw. deren Strömungsschatten nicht gegeben, so dass eine zuverlässigere Reinigung erzielt wird.

Bei der erfindungsgemäßen Vorrichtung bewirkt das Mischelement als Druckerhöhungselement einen erhöhten Druck im Bereich zwischen Pumpe und Mischelement. Bei Durchfließen des Mischelements baut sich in Durchflussrichtung die Druckerhöhung somit über eine längere Flussstrecke ab, so dass eine langsame Entspannung erfolgt. Dies ist für die Qualität des erzeugten Milchschaums vorteilhaft.

Die der Erfindung zugrunde liegende Aufgabe ist weiterhin durch ein Verfahren zum Erzeugen von Milchschaum gelöst. Das erfindungsgemäße Verfahren umfasst folgende Verfahrensschritte:
In einem Verfahrensschritt A erfolgt ein Fördern von Milch aus einem Behälter mittels einer Pumpe. In einem Verfahrensschritt B erfolgt ein Zuführen von Luft zu der Milch und in einem Verfahrensschritt C erfolgt ein Durchleiten des Milch-Luftgemischs bzw. des Milchschaums durch ein Druckerhöhungselement druckseitig der Pumpe.

Diese Verfahrensschritte sind grundsätzlich von vorbekannten Verfahren zur Milchschaumerzeugung bekannt. Wesentlich ist, dass bei dem erfindungsgemäßen Verfahren als Druckerhöhungselement ein Mischelement verwendet wird, welches eine sich in Durchflussrichtung nicht verringernde Durchfluss-Querschnittsfläche aufweist, die eingangsseitig zumindest dem Leitungsquerschnitt einer zwischen Pumpe und Mischelement angeordneten Verbindungsleitung entspricht.

Auch das erfindungsgemäße Verfahren zeichnet sich somit dadurch aus, dass eine Druckerhöhung nicht durch eine Änderung der Durchfluss-Querschnittsfläche beispielsweise mittels einer Drossel oder eines Labyrinth-Durchlasses erfolgt, sondern mittels eines Mischelements mit einer sich in Durchflussrichtung nicht verringernden Durchfluss-Querschnittsfläche.

Hierdurch ergeben sich die bereits zuvor bei der Beschreibung der erfindungsgemäßen Vorrichtung genannten Vorteile.

Weiterhin weisen das erfindungsgemäße Verfahren und die erfindungsgemäße Vorrichtung den Vorteil auf, dass das als Mischelement ausgebildete Druckerhöhungselement in zweierlei Weise zur Milchschaumbildung beitragen kann: Einerseits kann aufgrund der Druckerhöhung die Milchschaumerzeugung ganz oder zumindest im Wesentlichen aufgrund der Durchmischung in der Pumpe erfolgen. Dies ist insbesondere in einer vorzugsweisen Ausführungsform bei Ausbildung der Pumpe als Zahnradpumpe der Fall. Sofern keine oder keine vollständige zur Erzeugung des Milchschaums ausreichende Durchmischung stromaufwärts des Mischelements erfolgte, trägt nun auch die Durchmischung im Mischelement selbst zur Milchschaumbildung bei.

Die saugseitig der Pumpe angeordnete Luftzufuhr führt in Kombination mit der Druckerhöhung aufgrund des Mischelements zu einem qualitativ besonders hochwertige Milchschaum, da der Milchschaum im Wesentlichen bereits in der Pumpe aus dem angesaugten Milch/Luftgemisch gebildet wird.

In einer bevorzugten Ausführungsform der erfindungsgemäßen Vorrichtung weist das Mischelement mindestens zwei Trennelemente auf. Die Trennelemente sind derart zusammenwirkend ausgebildet und hintereinander im Flussweg eines das Mischelement durchströmenden Fluids angeordnet, dass eine Aufteilung in zwei oder mehrere Teilströme und eine Vermischung der Teilströme des durchströmenden Fluids erfolgt.

Hierdurch kann in technisch unaufwändiger Weise ein als Mischelement ausgebildetes Druckerhöhungselement realisiert werden, welches in Durchflussrichtung eine sich nicht verringernde Durchfluss-Querschnittsfläche aufweist.

Insbesondere ergibt sich eine vorteilhafte, konstruktiv einfache Ausführungsform, indem mindestens ein erstes Trennelement in dem Flussweg des durchströmenden Fluids angeordnet ist, welches erste Trennelement zum Aufteilen des in das Mischelement eintretenden Fluids in mindestens einen ersten und einen zweiten Teilstrom ausgebildet ist. Weiterhin ist in dem Flussweg des Mischelements stromabwärts des ersten Trennelements mindestens ein zweites Trennelement angeordnet. Das zweite Trennelement ist zum Aufteilen sowohl des ersten, als auch des zweiten Teilstroms des ersten Trennelements ausgebildet und derart mit dem ersten Trennelement zusammenwirkend ausgebildet, dass ein Teil des ersten Teilstroms des ersten Trennelements mit einem Teil des zweiten Teilstroms des ersten Trennelements zu einem neuen Teilstrom vereint wird.

Hierdurch kann in einfacher Weise eine wirksame Vermischung und gleichzeitig eine Druckerhöhung erzielt werden. Insbesondere kann in konstruktiv einfacherer Ausgestaltung eine Aneinanderreihung mehrerer Trennelemente erfolgen, insbesondere mehrerer Gruppen der vorbeschriebenen Gruppe von erstem und zweitem Trennelement. Zur Erzielung einer zur Erzeugung von Milchschaum bevorzugten Durchmischung und Druckerhöhung sind vorzugsweise mindestens drei, bevorzugt mindestens fünf, insbesondere bevorzugt mindestens acht hintereinander angeordnete Trennelemente vorgesehen.

Eine weitere Verbesserung der Durchmischung und Druckerhöhung erfolgt in einer vorzugsweisen Ausführungsform, in welcher die Trennelemente zusätzlich zur Ausbildung eines zumindest bereichsweise helixartigen Flussweges der Teilströme ausgebildet sind. Durch den helixartigen Flussweg wird die Druckerhöhung vergrößert und gleichzeitig auch eine Durchmischung während des Durchfließens des helixartigen Flussweges durch einen Teilstrom in dem Teilstrom selbst ermöglicht.

Insbesondere ist es zur Erhöhung der Mischungsfunktion und der Druckerhöhung vorteilhaft, wenn der Drehsinn des helixartigen Flussweges des ersten Trennelements entgegengesetzt zu dem Drehsinn des helixartigen Flussweges des zweiten Trennelements ist.

In einer bevorzugten Ausführungsform, in welcher mehrere Gruppen der vorbeschriebenen Gruppe von erstem und zweitem Trennelement vorgesehen sind, sind die Trennelemente somit vorzugsweise derart angeordnet, dass in Durchflussrichtung ein alternierender Drehsinn ausgebildet ist.

Die vorgenannten Vorteile und konstruktiv einfachen Ausgestaltungen werden insbesondere in einer vorzugsweisen Ausführungsform erreicht, in welcher die Trennelemente als Wendelelemente ausgebildet sind. Insbesondere ist das Mischelement somit als Wendelmischer ausgebildet. Wendeimischer sind an sich zum Mischen von zwei Komponentenklebern bekannt. Dort erfolgt jedoch anders als bei der vorliegend beanspruchten Verwendung in einer Vorrichtung zur Erzeugung von Milchschaum eine Vermischung zweier unterschiedlicher, nicht kompressibler Flüssigkeiten.

Wie zuvor beschrieben, vermeidet die Verwendung eines Mischelementes als Druckerhöhungselement die Nachteile einer Drosselstelle insbesondere dadurch, dass keine stark turbulenten Strömungsbereiche auftreten.

In einer vorzugsweisen Ausführungsform ist daher im Leitungsweg zwischen Pumpe und Mischelement keine Drosselstelle vorgesehen. Insbesondere ist es vorteilhaft, dass sich im Leitungsweg zwischen Pumpe und Mischelement die Durchfluss-Querschnittsfläche nicht verringert.

Weiterhin werden die vorgenannten Nachteile in besonderem Maße vermieden, indem sich im Leitungsweg zwischen Pumpe und einem Auslass für den Milchschaum, welcher Auslass stromabwärts des Mischelements angeordnet ist, die Durchfluss-Querschnittsfläche nicht verringert. In dieser letztgenannten bevorzugten Ausführungsform erfolgt somit stromabwärts der Pumpe bis zur Ausgabe des Milchschaums keine Verringerung der Durchfluss-Querschnittsfläche, so dass im gesamten Leitungsweg stromabwärts der Pumpe die vorgenannten Nachteile vermieden werden.

Es liegt im Rahmen der Erfindung, dass die Bedingung einer sich nicht verringernden Durchfluss-Querschnittsfläche durch eine konstante Durchflussquerschnittsfläche, welche somit einen konstanten Flächeninhalt, gegebenenfalls jedoch eine sich verändernde Flächenform aufweist, erzielt wird. Ebenso kann in einem oder einer Mehrzahl von Bereichen eine Vergrößerung der Durchfluss-Querschnittsfläche erfolgen, insbesondere eine allmähliche und/oder stufenförmige Vergrößerung.

Die Querschnittsflächen und insbesondere Innendurchmesser der Leitungen und des Mischelementes, sowie der gegebenenfalls weiteren Komponenten wie Ventile und Durchlauferhitzer können im Rahmen der bei solchen Vorrichtungen und Verfahren üblichen Maße liegen, unter Berücksichtigung der oben genannten zusätzlichen Bedingungen, insbesondere hinsichtlich der sich in Durchflussrichtung nicht verringernden Durchfluss-Querschnittsfläche des Mischelements. Insbesondere liegen Durchfluss-Querschnittsflächen im Bereich 2 mm² bis 15 mm² im Rahmen der Erfindung.

Vorzugsweise ist die Pumpe als Zahnradpumpe ausgebildet.

Die Leitungsquerschnitte, die Ausgestaltung der Pumpe und das Mischelement sind vorzugsweise derart zusammenwirkend ausgebildet, dass sich zwischen Eingang und Ausgang des Mischelements eine Druckdifferenz im Bereich 2 bar bis 15 bar, vorzugsweise von zumindest 3 bar, insbesondere von zumindest 5 bar ausbildet. Hierdurch wird eine vorteilhafte Druckerhöhung zur Ausbildung von Milchschaum erzielt, insbesondere bei Ausgestaltung der Pumpe als Zahnradpumpe.

Aufgrund der starken Nachfrage an Kaffee-Mischgetränken sind zunehmend auch kalte Kaffee-Mischgetränke gewünscht. Vorzugsweise sind bei der erfindungsgemäßen Vorrichtung daher zwei parallele Flusswegabschnitte zum wahlweisen Erzeugen von warmem oder kaltem Milchschaum vorgesehen, wobei in einem ersten der Flusswegabschnitte ein Durchlauferhitzer angeordnet ist.

Es kann somit in einfacher Weise durch Auswählen des Flussweges umfassend den ersten Flusswegabschnitt warmer Milchschaum mittels des Durchlauferhitzers erzeugt werden. Ebenso kann durch Auswählen des zweiten Flusswegabschnitts kalter Milchschaum erzeugt werden, ohne dass der Durchlauferhitzer in diesem Fall durchströmt wird.

Eine konstruktiv besonders einfache Ausgestaltung einer solchen vorzugsweisen Ausführungsform zum wahlweisen Erzeugen von warmem oder kaltem Milchschaum ergibt sich, indem druckseitig der Pumpe eine Verzweigung in die beiden parallelen Flusswegabschnitte vorgesehen ist. Hierbei kann in einfacher Weise ein Zweiwegeventil zur Auswahl des zu durchfließenden Flusswegabschnitts vorgesehen sein. Ebenso kann eine Y-Leitungsverzweigung vorgesehen sein, wobei in jedem Flusswegabschnitt jeweils ein Ventil angeordnet ist, so dass durch entsprechendes Öffnen eines der beiden Ventile einer der beiden parallelen Flusswegabschnitte ausgewählt werden kann. Bei dieser vorzugsweisen Ausführungsform ist zumindest in dem zweiten parallelen Flusswegabschnitt ohne Durchlauferhitzer bevorzugt das Mischelement angeordnet.

Grundsätzlich ist die Verwendung des Mischelements als Druckerhöhungselement sowohl zum Erzeugen von warmem als auch zum Erzeugen von kaltem Milchschaum geeignet. Insbesondere ergibt sich eine vorteilhafte Anwendung bei der Erzeugung von kaltem Milchschaum. Es liegt daher im Rahmen der Erfindung, bei Ausbildung der Vorrichtung zum wahlweisen Erzeugen von warmem oder kaltem Milchschaum ein gemeinsames als Mischelement ausgebildetes Druckerhöhungselement in einem gemeinsamen Flussweg beispielsweise unmittelbar oder nahe des Druckausgangs der Pumpe vorzusehen. Ebenso liegt es im Rahmen der Erfindung, in jedem der beiden parallelen Flusswegabschnitte jeweils mindestens ein Druckerhöhungselement, vorzugsweise jeweils genau ein Druckerhöhungselement vorzusehen, wobei zumindest eines der beiden Druckerhöhungselemente als Mischelement ausgebildet ist und insbesondere bevorzugt im Flusswegabschnitt ohne Durchlauferhitzer das Druckerhöhungselement als Mischelement ausgebildet ist. Das andere Druckerhöhungselement kann in an sich bekannter Weise als Drosselstelle oder als Labyrinthdurchlass ausgebildet sein. Insbesondere ist es jedoch vorteilhaft, in beiden parallelen Flusswegabschnitten jeweils ein als Mischelement ausgebildetes Druckerhöhungselement vorzusehen.

Bei dem erfindungsgemäßen Verfahren wird der Milchschaum vorzugsweise aus gekühlter Milch erzeugt und anschließend erwärmt, insbesondere vorzugsweise wahlweise erwärmt, wobei die Erwärmung bevorzugt mittels eines Durchlauferhitzers erfolgt. Es erfolgt somit auch bei einer Ausgabe von warmem Milchschaum bevorzugt im Wesentlichen eine Erzeugung von kaltem Milchschaum und anschließend eine Erwärmung des kalten Milchschaums insbesondere mittels eines Durchlauferhitzers. Hierdurch wird ein besonders qualitativ hochwertiger warmer Milchschaum erzielt.

Wie zuvor beschrieben, ist es vorteilhaft, dass in dem Mischelement eine im wesentlichen laminare Mischung erfolgt, um die vorbeschriebenen Nachteile aufgrund starker Turbulenzen beispielsweise bei Verwendung einer Drossel zu vermeiden.

Bei dem erfindungsgemäßen Verfahren wird vorzugsweise druckseitig der Pumpe das Milch-Luftgemisch wahlweise durch einen Durchlauferhitzer geführt, wobei zumindest zur Ausgabe von kaltem Milchschaum unter Umgehung des Durchlauferhitzers das Milch-Luftgemisch durch das Mischelement geleitet wird. Hierdurch wird wie zuvor beschrieben in einfacher Weise sowohl die Ausgabe von kaltem, als auch von warmem Milchschaum ermöglicht.

Die vorliegende Erfindung beruht insbesondere auf der überraschenden Erkenntnis, dass die Verwendung eines Wendelmischers als Druckerhöhungselement bei der Erzeugung von Milchschaum die vorbeschriebenen Vorteile bietet. Insbesondere vermeidet die Verwendung eines Wendelmischers Bereiche hochturbulenter Strömungen, es wird einerseits eine Druckerhöhung und andererseits eine langsamere Entspannung gegenüber einer Drosselstelle erzielt. Darüber hinaus ermöglicht die Verwendung eines Wendelmischers bei gleichem Druckabfall eine bessere Durchmischung.

Diese vorgenannten Vorteile werden in erhöhter Form erzielt, indem ein Wendelmischer mit konstanter Durchfluss-Querschnittsfläche als Druckerhöhungselement bei der Erzeugung von Milchschaum verwendet wird.

Weitere bevorzugte Merkmale und bevorzugte Ausführungsformen der erfindungsgemäßen Vorrichtung und des erfindungsgemäßen Verfahrens werden im Folgenden anhand von Ausführungsbeispielen und der Figuren beschrieben. Dabei zeigt:
- Figur 1: ein Flussschema eines ersten Ausführungsbeispiels einer erfindungsgemäßen Vorrichtung;
- Figur 2: eine Darstellung eines Teilbereichs A gemäß Figur 1, welcher ein Mischelement umfasst;
- Figur 3: einen Querschnitt gemäß Schnittlinie B in Figur 2, wobei die Schnittebene senkrecht zur Zeichenebene in Figur 2 steht;
- Figur 4: perspektivische Ansichten des Mischelements gemäß Figur 2 und
- Figuren 5 bis 12: Flussschemata weiterer Ausführungsbeispiele einer erfindungsgemäßen Vorrichtung.

In den Figuren bezeichnen gleiche Bezugszeichen gleiche oder gleichwirkende Elemente.

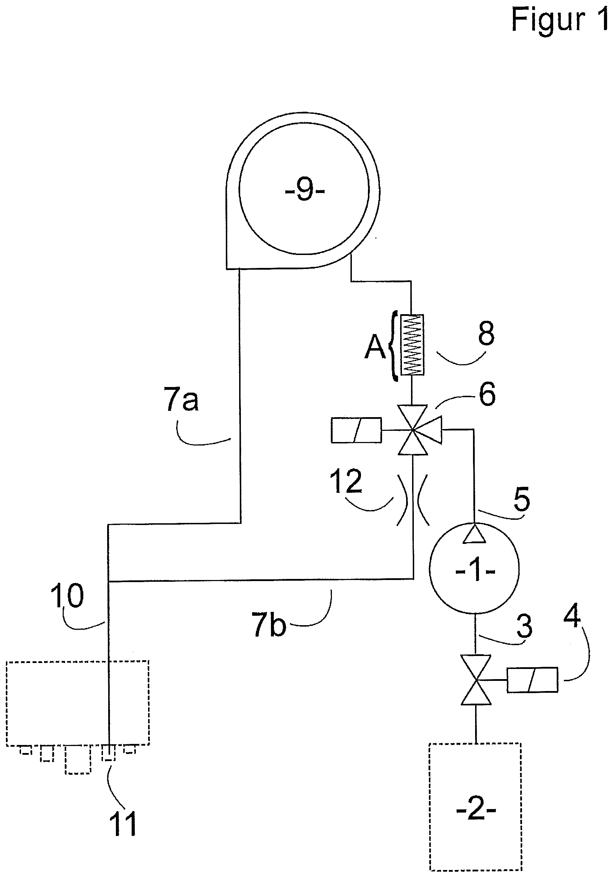

Figur 1 zeigt ein erstes Ausführungsbeispiel einer erfindungsgemäßen Vorrichtung zum Erzeugen von Milchschaum. Die Vorrichtung weist eine als Zahnradpumpe ausgebildete Pumpe 1 auf zum Fördern von Milch aus einem Milchbehälter 2 mittels einer Ansaugleitung 3. In die Ansaugleitung 3 ist ein Luftventil 4 integriert, zum Zuführen von Luft zu der Milch während des Ansaugens durch die Pumpe 1.

Druckseitig ist die Pumpe 1 über eine Druckleitung 5 mit einem Zweiwegeventil 6 verbunden. Mittels des Zweiwegeventils 6 ist wahlweise ein Flussweg über einen ersten oder einen zweiten von zwei parallelen Flusswegabschnitten möglich. Der erste Flusswegabschnitt 7a weist stromabwärts des Zweiwegeventils 6 ein als Mischelement 8 ausgebildetes Druckerhöhungselement und weiter stromabwärts einen Durchlauferhitzer 9 auf. Stromabwärts des Durchlauferhitzers 9 führt der erste Flusswegabschnitt 7a zu einer gemeinsamen Auslassleitung 10, welche in einen Auslass 11 einer Kaffeemaschine (nicht dargestellt) mündet, so dass der Milchschaum über den Auslass 11 zusammen mit Kaffee in ein Behältnis wie beispielsweise eine Tasse ausgegeben werden kann. Der zweite Flusswegabschnitt 7b weist stromabwärts des Zweiwegeventils 6 eine Drossel 12 auf. Stromabwärts der Drossel 12 mündet auch der zweite Flusswegabschnitt 7b in die Auslassleitung 10 und schließlich in den Auslass 11.

Zur Erzeugung von warmem Milchschaum wird Milch mittels der Pumpe 1 gefördert, wobei saugseitig der Pumpe mittels des Luftventils 4 Luft zugeführt wird. Druckseitig der Pumpe wird das Fluid über die Druckleitung 5 und den ersten Flusswegabschnitt 7a zu dem Durchlauferhitzer 9 geführt, wobei aufgrund des Mischelements 8 in dem Flusswegabschnitt 7a eine Druckerhöhung druckseitig der Pumpe erfolgt, so dass sich Milchschaum ausbildet, welcher zusätzlich in dem Mischelement 8 durchmischt wird.

Mittels des Durchlauferhitzers 9 wird der Milchschaum erwärmt und schließlich an dem Auslass 11 ausgegeben.

Zum Erzeugen von kaltem Milchschaum wird ebenfalls Milch mittels der Pumpe 1 aus dem Milchbehälter 2 gefördert, wobei saugseitig mittels des Luftventils 4 Luft zugeführt wird. Anschließend wird der Flussweg über den zweiten Flusswegabschnitt 7b gewählt, wobei aufgrund der Drossel 12 eine Druckerhöhung druckseitig der Pumpe erfolgt und unter Umgehung des Durchlauferhitzers 9 kalter Milchschaum an dem Auslass 11 ausgegeben wird.

In einer weiteren (nicht dargestellten) Ausführungsform sind Drossel 12 und Mischelement 8 vertauscht, so dass bei Erzeugen von kaltem Milchschaum das Mischelement 8 durchströmt wird und bei Erzeugen von warmem Milchschaum die Drossel 12 durchströmt wird.

In einem weiteren, insbesondere vorteilhaftem Ausführungsbeispiel (ebenfalls nicht dargestellt) ist in beiden Flusswegabschnitten (7a, 7b) jeweils ein Mischelement angeordnet, d. h. in diesem Ausführungsbeispiel ist die Drossel 12 ebenfalls durch ein Mischelement analog Mischelement 8 ersetzt.

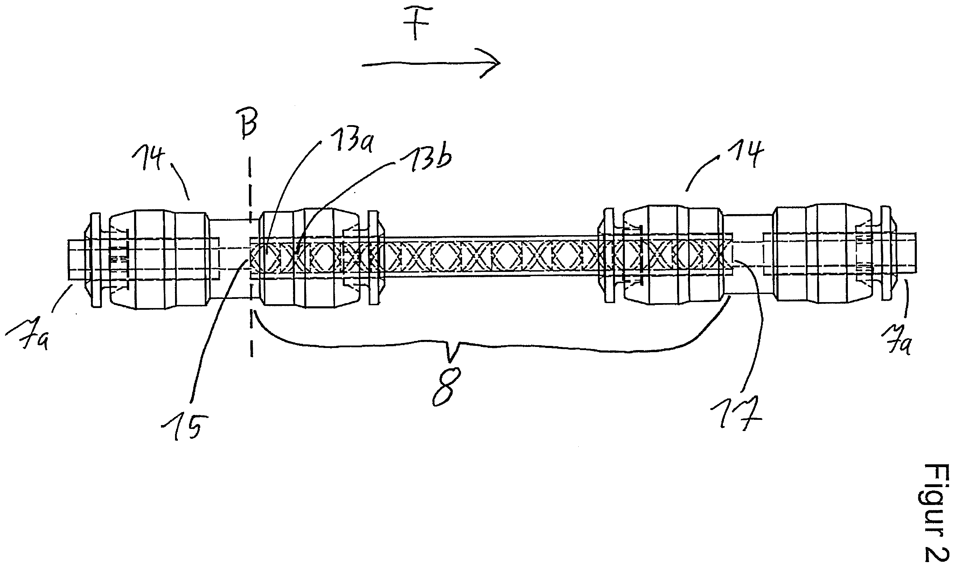

In Figur 2 ist eine schematische Darstellung des Mischelements 8 gezeigt. Hierbei ist das Mischelement 8 in Schnittdarstellung dargestellt, wobei die Schnittebene entlang einer Mittelachse des im Wesentlichen zylindrischen Mischelementes 8 verläuft.

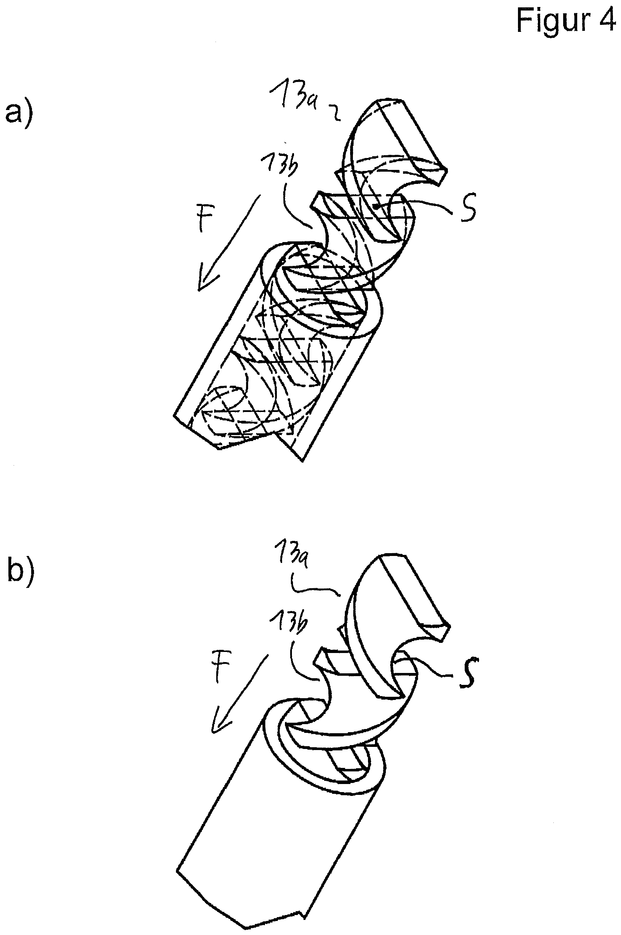

Das Mischelement 8 weist einen in etwa zylindrischen Mantel auf. Im Innern sind mehrere Trennelemente angeordnet, wobei in Figur 2 beispielsweise ein erstes Trennelement 13a und ein zweites Trennelement 13b gekennzeichnet ist. Die Trennelemente 13a und 13b sind als Wendel ausgeführt, wie nachfolgend in Verbindung mit den Figuren 4a und 4b näher erläutert wird.

Wie in Figur 2 ersichtlich, sind in Flussrichtung F des Mischelements 8 eine Mehrzahl von Trennelementen hintereinander angeordnet (vorliegend 16 Trennelemente). Die Trennelemente sind derart ausgebildet und angeordnet, dass ein Wendelmischer mit alternierendem Drehsinn ausgebildet wird, wie ebenfalls nachfolgend in Verbindung mit den Figuren 4a und 4b näher erläutert wird.

Wesentlich ist, dass die Durchfluss-Querschnittsfläche des Mischelements 8 sich in Prozessrichtung nicht verringert. Vorliegend ist das Mischelement 8 derart ausgebildet, dass die Durchfluss-Querschnittsfläche in Prozessrichtung hinsichtlich des Flächeninhalts konstant ist.

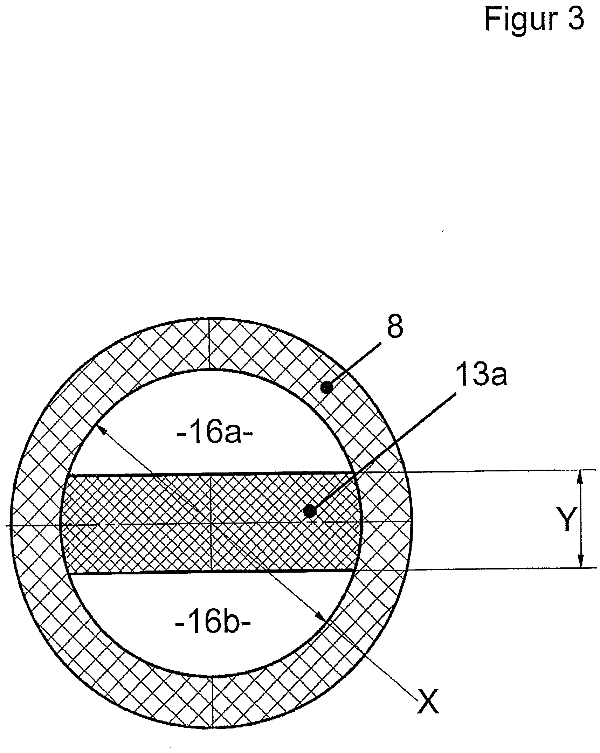

Das Mischelement 8 ist stromaufwärts und stromabwärts über Steckverbindungen 14 mit der Leitung des ersten Flusswegabschnitts 7a verbunden. Wesentlich ist, dass an der eingangsseitigen Anschlussstelle 15, an welcher eingangsseitig die Leitung des Flusswegabschnitts 7a an das Mischelement 8 angrenzt, keine Verringerung der Durchfluss-Querschnittsfläche erfolgt. Vorliegend erfolgt eine Erweiterung der Durchfluss-Querschnittsfläche, wie nachfolgend anhand von Figur 3 erläutert:
Figur 3 zeigt ein Schnittbild gemäß Schnittlinie B in Figur 2, wobei die Schnittebene senkrecht zur Zeichenebene in Figur 2 steht. Dargestellt sind lediglich die Elemente des Mischelements 8, nicht Elemente der Steckverbindung 14.

Wie in Figur 3 ersichtlich, weist der zylindrische Außenmantel des Mischelements 8 einen ringförmigen Querschnitt auf. Das Trennelement 13a weist einen in etwa rechteckigen Querschnitt auf und grenzt an zwei gegenüberliegenden Seiten fluiddicht an die Innenwände des Außenmantels an.

Die Durchfluss-Querschnittsteilflächen 16a und 16b stellen somit an dieser eingangsseitigen Position des Mischelements 8 den Flussbereich für das Fluid dar. Die Summe der Querschnittsflächen 16a und 16b, welche somit die Durchfluss-Querschnittsfläche an dieser Position ergibt ist größer als die (kreisförmige) Querschnittsfläche der Leitung des ersten Flusswegabschnitts 7a unmittelbar vor dem Mischelement 8. Ausgangsseitig des Durchflusselements 8 (an der Anschlussstelle 17, siehe Figur 2 weist die Leitung des Flusswegabschnitts 7a einen Innendurchmesser auf, welcher dem Innendurchmesser des Mantels des Mischelements 8 entsprechen kann. Vorliegend ist der Innendurchmesser des Flusswegabschnitts 7a an der Anschlussstelle 17 zwar kleiner als Innendurchmesser des Mantels des Mischelements 8, jedoch derart gewählt, dass gegenüber des Gesamt-Durchfluss-Querschnittsfläche des Mischelementes (16a und 16b) eine Vergrößerung der Durchfluss-Querschnittsfläche am Ausgang des Mischelements 8 vorliegt. Auch am Ausgang des Mischelements 8 erfolgt somit keine Verringerung der Durchfluss-Querschnittsfläche, sondern vorliegend eine Erweiterung der Durchfluss-Querschnittsfläche.

In Figur 4 ist in den Teilbildern a) und b) jeweils eine perspektivische Ansicht der als Wendel ausgebildeten Trennelemente 13a und 13b gezeigt.

Teilbild a) zeigt hierbei in einem vorderen Bereich die Trennelemente 13a und 13b, wobei zur besseren Übersicht die Mantelfläche des Mischelements 8 nicht dargestellt ist. Diese ist lediglich in einem hinteren Bereich gezeigt.

Wie in Figur 4a) ersichtlich, sind die Trennelemente 13a und 13b unmittelbar hintereinander angeordnet und als Wendel ausgebildet. Wenn das Fluid in Flussrichtung F das Mischelement 8 durchströmt, wird somit durch das Trennelement 13a der Fluidstrom in einem ersten und einem zweiten Teilstrom aufgeteilt. An der Schnittstelle S, an welcher Trennelement 13a und Trennelement 13b unmittelbar aneinanderstoßen sind die in etwa rechteckigen Querschnittsflächen der Trennelemente jedoch um etwa 90° gegeneinander verdreht, so dass der erste und der zweite Teilstrom jeweils nochmals geteilt wird, derart, dass eine erste Hälfte des ersten Teilstroms mit einer ersten Hälfte des zweiten Teilstroms zu einem neuen Teilstrom vereint wird und entsprechend eine zweite Hälfte des ersten Teilstroms mit einer zweiten Hälfte des zweiten Teilstroms zu einem neuen zweiten Teilstrom vereint wird.

Durch die Ausbildung der Trennelemente 13a und 13b als Wendel ergeben sich für die Teilströme jeweils helixartige Flusswege entlang der Wendel.

Weiterhin ist der Drehsinn der helixartigen Flusswege des Wendels 13a entgegengesetzt zu dem Drehsinn der helixartigen Flusswege des Wendels 13b. Durch die Summe dieser Maßnahmen, insbesondere mehrfaches Unterteilen und Zusammenführen der Teilströme, helixartige Flusswege sowie Änderung des Drehsinns der helixartigen Flusswege ergibt sich insgesamt eine besonders wirksame Durchmischung und die Eigenschaft als Druckerhöhungselement.

In Figur 4b ist die gleiche perspektivische Ansicht wie in Figur 4a dargestellt, jedoch sind die Trennelemente nur durch ihre Kanten gekennzeichnet, so dass auch hinten liegende Kanten als gestrichelte Linien ersichtlich sind. Ebenso ist hierdurch die Lage der Trennelemente innerhalb des Mantels des Mischelements 8 ersichtlich.

Bei dem Ausführungsbeispiel gemäß Figur 1 weisen die Leitungen saugseitig der Pumpe sowie das Luftventil 4 Innendurchmesser von 2 mm (entsprechend Durchfluss-Querschnittsflächen von ca. 3,14 mm²) auf. Das Mischelement weist einen Innendurchmesser der Mantelfläche (Bezugszeichen X in Figur 3) von 3 mm auf, das Trennelement 13a eine Dicke von etwa 0,95 mm (Bezugszeichen Y in Figur 3). Hierdurch ergibt sich insgesamt für die Flächen 16a und 16b eine Gesamt-Durchfluss-Querschnittsfläche von ca. 4,26 mm². Die sich stromabwärts an das Mischelement 8 anschließenden Leitung bis zum Durchlauferhitzer 9 weist einen Innendurchmesser von 2,5 mm (entsprechend einer Durchfluss-Querschnittsfläche von ca. 4,91 mm²) auf. Der Durchlauferhitzer weist einen Innendurchmesser von 3 mm (entsprechend einer Durchfluss-Querschnittsfläche von ca. 7,07 mm²) auf. Die stromabwärts des Durchlauferhitzers angeordneten Leitungen weisen ebenfalls einen Innendurchmesser von mindestens 3 mm auf.

In Zusammenwirkung mit der Zahnradpumpe ergibt sich zwischen der eingangsseitigen Anschlussstelle 15 und der ausgangsseitigen Anschlussstelle 17 des Mischelements 8 eine Druckdifferenz von etwa 5 bar.

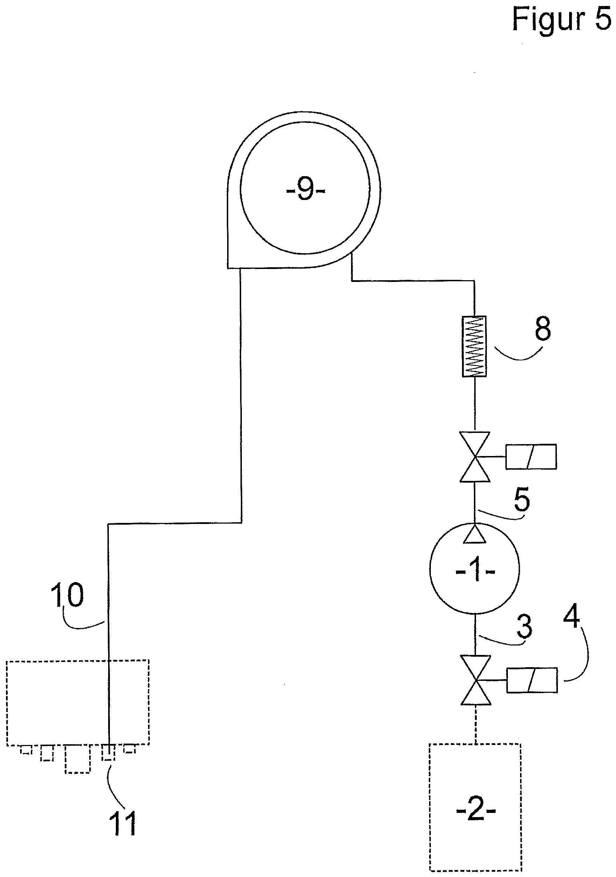

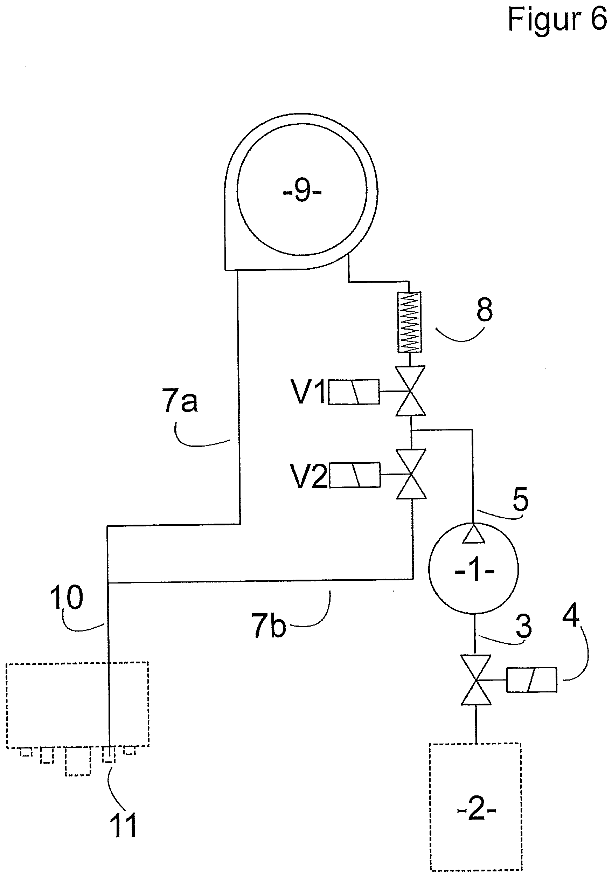

In den weiteren Figuren sind weitere Ausführungsbeispiele einer erfindungsgemäßen Vorrichtung dargestellt, wobei gleiche Bezugszeichen gleiche oder gleichwirkende Elemente bezeichnen. Zur Vermeidung von Wiederholungen wird nachfolgend lediglich auf die wesentlichen Unterschiede im Flussschema eingegangen:
Das Ausführungsbeispiel gemäß Figur 5 weist keine parallelen Flussabschnitte auf. Die mittels der Pumpe 1 geförderte Milch wird stets über die Druckleitung 5, in welcher das Mischelement 8 angeordnet ist, über den Durchlauferhitzer 9 zu dem Auslass 11 geleitet. Hierbei kann durch Abschalten des Durchlauferhitzers 9 kalter Milchschaum erzeugt werden. Das Ausführungsbeispiel gemäß Figur 6 weist zwei parallele Leitungsabschnitte auf, wobei jedoch lediglich in dem parallelen Leitungsabschnitt mit dem Durchlauferhitzer 9 ein Mischelement 8 angeordnet ist. Der andere parallele Leitungsabschnitt weist weder ein Druckerhöhungselement noch einen Durchlauferhitzer auf und dient lediglich zur Ausgabe von kalter Milch aus dem Auslass 11.

Hierbei ist die Verzweigung druckseitig der Pumpe in die beiden parallelen Leitungsabschnitte als Y-Leitungsabschnitt ausgebildet und es sind zwei Ventile V1 und V2 vorgesehen, so dass durch Öffnen eines der beiden Ventile einer der beiden parallelen Abschnitte als Flussweg gewählt werden kann. Alternativ kann anstelle des Y-Leitungsabschnitts auch ein Zweiwegeventil gewählt werden, so dass auf die Ventile V1 und V2 verzichtet werden kann.

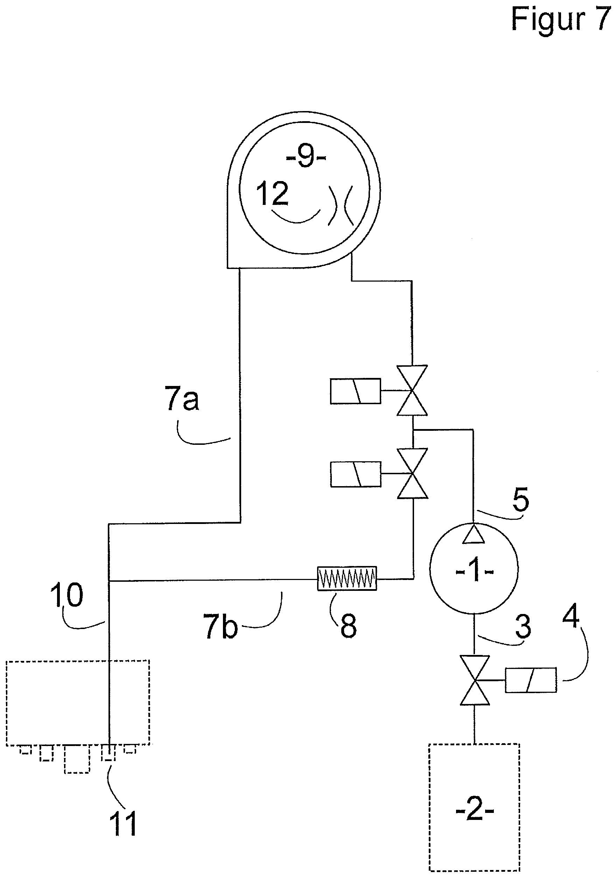

Figur 7 weist ein Ausführungsbeispiel mit einem Flussschema ähnlich den des in Figur 6 dargestellten Ausführungsbeispiels auf. Bei dem Ausführungsbeispiel gemäß Figur 7 ist jedoch in dem parallelen Leitungsabschnitt ohne Durchlauferhitzer 9 das Mischelement 8 angeordnet. Weiterhin ist in dem Durchlauferhitzer 9 eine Drosselstelle integriert. Bei Erzeugen von kaltem Milchschaum dient somit das Mischelement 8 als Druckerhöhungselement und bei Erzeugen von warmem Milchschaum dient die in den Durchlauferhitzer 9 integrierte Drosselstelle als Druckerhöhungselement.

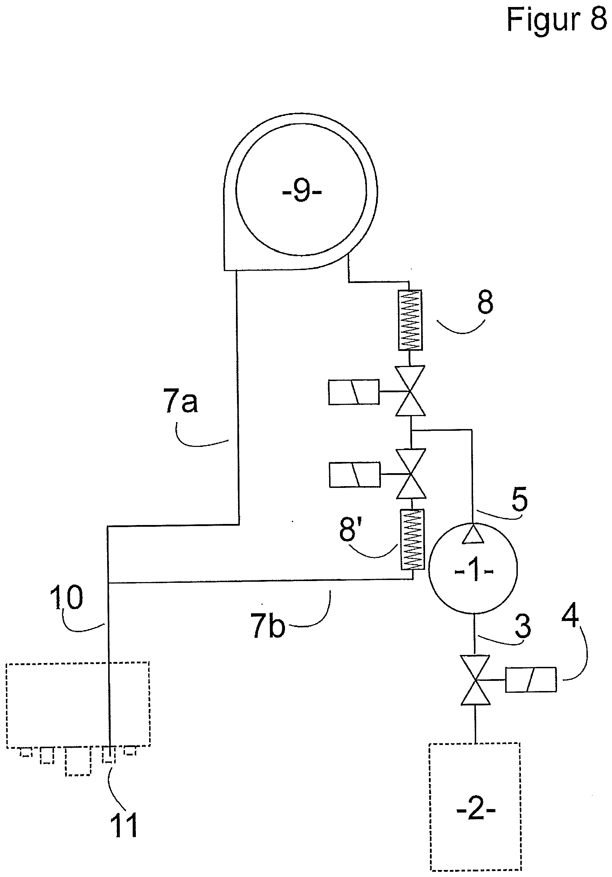

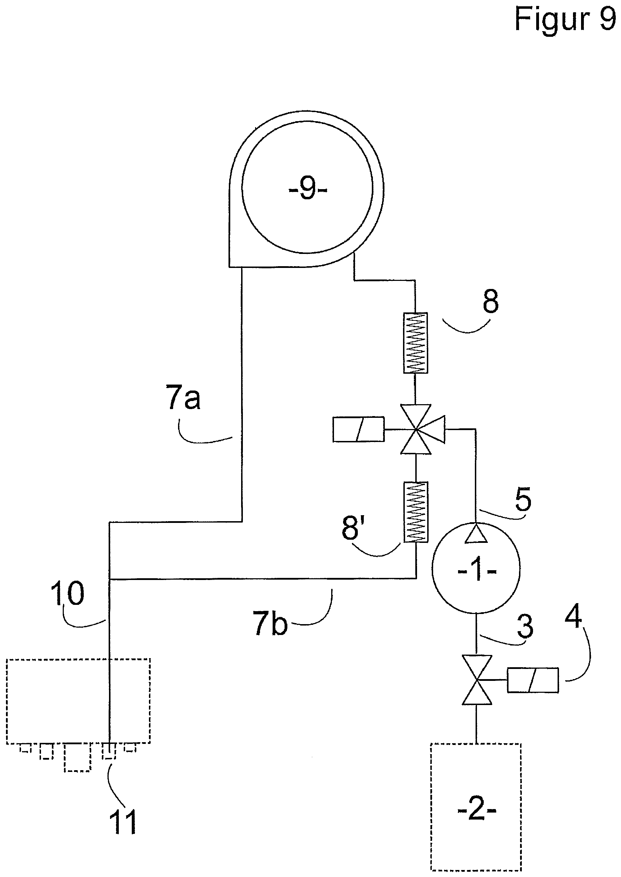

Die Figuren 8 und 9 zeigen zwei weitere Ausführungsbeispiele mit einem Flussschema vergleichbar zu dem des ersten Ausführungsbeispiels gemäß Figur 1.

Bei dem Ausführungsbeispiel gemäß Figur 8 ist jedoch die Drossel 12 gemäß Figur 1 durch ein zweites Mischelement 8' ersetzt. Ebenso ist das Zweiwegeventil 6 ersetzt durch zwei Ventile V1 und V2, welche jeweils stromabwärts einer Y-Verzweigung der Druckleitung 5 angeordnet sind.

Bei dem Ausführungsbeispiel Figur 9 ist hingegen wie auch in Figur 1 ein Zweiwegeventil 6 vorgesehen, um den Flussweg über den Durchlauferhitzer 9 oder unter Umgehung des Durchlauferhitzers 9 zu dem Auslass 11 auswählen zu können.

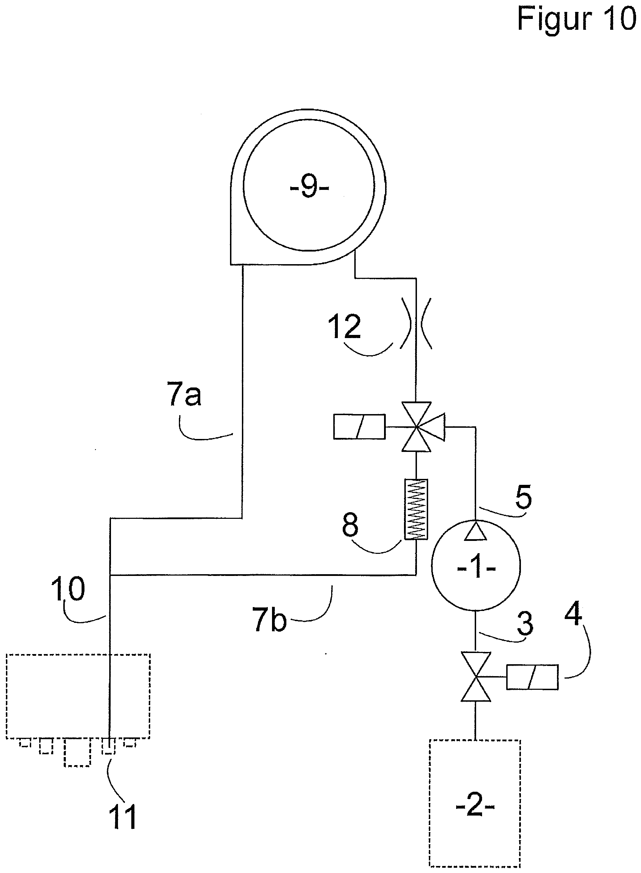

Figur 10 zeigt ein weiteres Ausführungsbeispiel mit einem ähnlichen Flussschema verglichen mit dem ersten Ausführungsbeispiel gemäß Figur 1. Hier ist jedoch die Position von Mischelement 8 und Drossel 12 vertauscht.

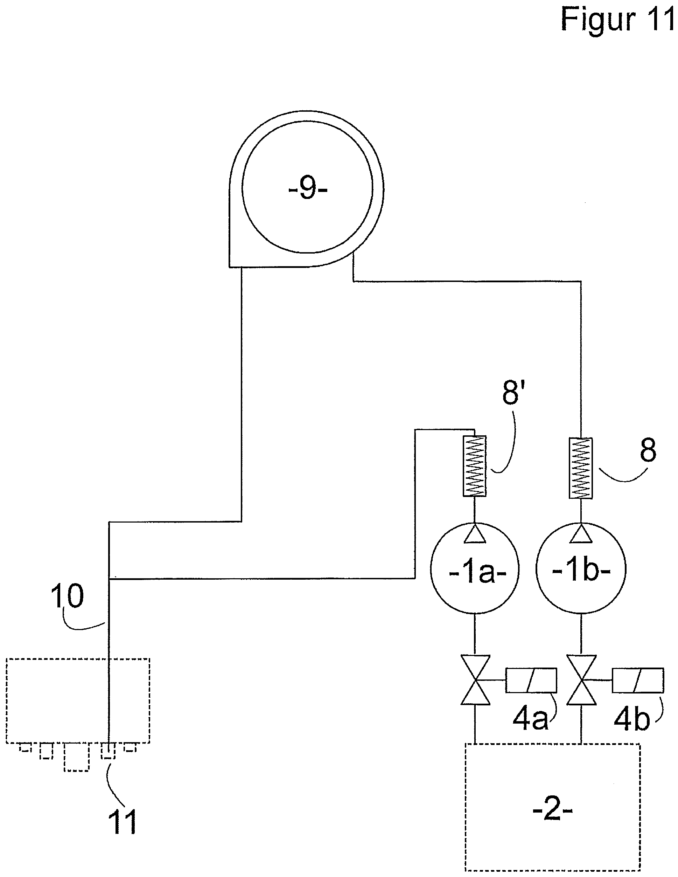

Figur 11 zeigt ein weiteres Ausführungsbeispiel, bei welchem eine erste Pumpe 1a mit einem erstem Luftventil 4a, welches saugseitig der Pumpe angeordnet ist, vorgesehen ist, wobei druckseitig der ersten Pumpe 1a ein Mischelement 8 angeordnet ist. Mittels dieser Komponenten kann somit kalter Milchschaum am Auslass 11 ausgegeben werden. Weiterhin ist eine zweite Pumpe 1b mit einem saugseitig der zweiten Pumpe 1b angeordneten zweiten Luftventil 4b vorgesehen. Druckseitig der zweiten Pumpe 1b ist ein Mischelement 8 und stromabwärts des Mischelements 8 ein Durchlauferhitzer 9 vorgesehen, so dass mittels der zweiten Pumpe 1b warmer Milchschaum an den Auslass 11 ausgegeben werden kann. Hier sind somit zwei separate Förderleitungen zum Fördern von Milch aus dem Milchbehälter 2 vorgesehen. Es erfolgt somit keine Verzweigung einer Leitung in zwei parallele Leitungsabschnitte.

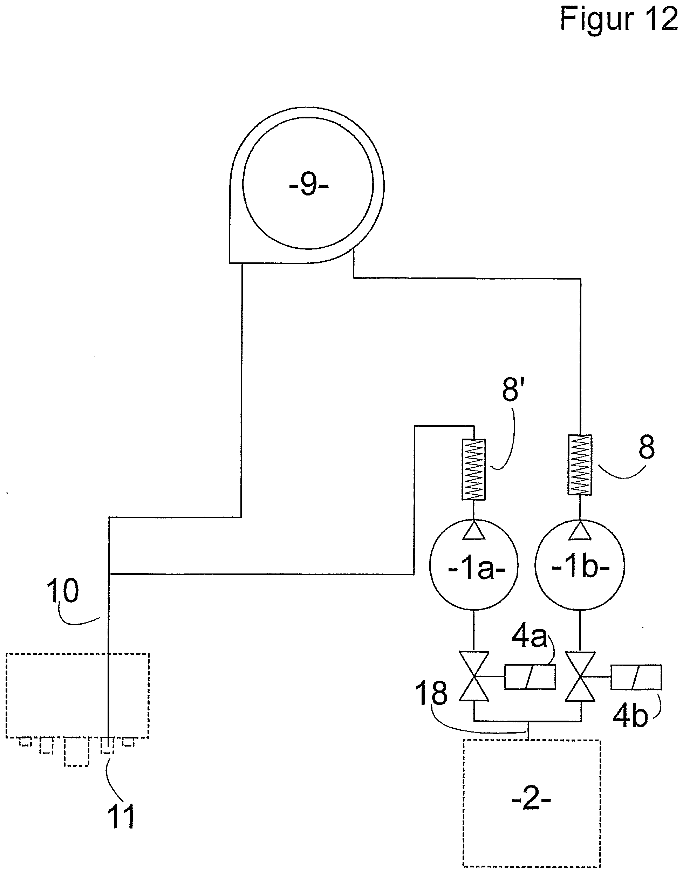

Das Ausführungsbeispiel gemäß Figur 12 stellt eine Variante des Ausführungsbeispiels gemäß Figur 11 dar:
Hier ist eine gemeinsame Förderleitung 18 vorgesehen, um Milch aus dem Milchbehälter 2 mittels wahlweise der erste Pumpe 1a oder der zweiten Pumpe 1b zu fördern. Die Förderleitung 18 verzweigt in eine Saugleitung welche saugseitig mit der ersten Pumpe 1a verbunden ist und eine weitere Saugleitung, welche saugseitig mit der zweiten Pumpe 1b verbunden ist.

Das Ausführungsbeispiel gemäß Figur 12 sieht wie auch bei dem Ausführungsbeispiel gemäß Figur 11 für jede Pumpe jeweils ein Luftventil vor. Alternativ kann statt dem ersten Luftventil 4a und dem zweiten Luftventil 4b auch lediglich ein gemeinsames Luftventil 4 in der Förderleitung 18 angeordnet sein.

## Patentansprüche

1. Vorrichtung zum Erzeugen von Milchschaum,
mit einer Pumpe (1, 1a, 1b) zum Fördern von Milch aus einem Behältnis, einem Lufteinlass (4) und mindestens einem Druckerhöhungselement, wobei das Druckerhöhungselement stromabwärts der Pumpe und der Lufteinlass stromaufwärts des Druckerhöhungselementes angeordnet ist, wobei das Druckerhöhungselement als Mischelement (8, 8') ausgebildet ist, welches eine sich in Durchflussrichtung nicht verringernde Durchfluss-Querschnittsfläche aufweist,
**dadurch gekennzeichnet,**
**dass** der Lufteinlass saugseitig der Pumpe (1, 1a, 1b) angeordnet ist, und die Durchfluss-Querschnittsfläche des Mischelements (8, 8') eingangsseitig zumindest dem Leitungsquerschnitt einer zwischen Pumpe (1, 1a, 1b) und Mischelement (8, 8') angeordneten Verbindungsleitung entspricht.

2. Vorrichtung nach Anspruch 1,
**dadurch gekennzeichnet,**
**dass** das Mischelement (8, 8') mindestens zwei Trennelemente (13a, 13b) aufweist, welche derart zusammenwirkend ausgebildet und hintereinander im Flussweg eines durchströmenden Fluids angeordnet sind, dass eine Aufteilung in zwei oder mehrere Teilströme und eine Vermischung der Teilströme des durchströmenden Fluids erfolgt,
insbesondere,
**dass** in dem Flussweg des durchströmenden Fluids mindestens ein erstes Trennelement (13a) angeordnet ist, welches erste Trennelement (13a) zum Aufteilen des in das Mischelement (8, 8') eintretenden Fluids in mindestens einen ersten und einen zweiten Teilstrom ausgebildet ist und
**dass** in dem Flussweg des Mischelementes stromabwärts des ersten Trennelementes mindestens ein zweites Trennelement (13 b) angeordnet ist, welches zweite Trennelement (13b) zum Aufteilen sowohl des ersten, als auch des zweiten Teilstroms des ersten Trennelementes (13a) ausgebildet und derart mit dem ersten Trennelement (13a) zusammenwirkend ausgebildet ist, dass ein Teil des ersten Teilstroms des ersten Trennelementes (13a) mit einem Teil des zweiten Teilstroms des ersten Trennelementes (13a) zu einem neuen Teilstrom vereint wird.

3. Vorrichtung nach Anspruch 2,
**dadurch gekennzeichnet,**
**dass** die Trennelemente (13a, 13b) zusätzlich zur Ausbildung eines zumindest bereichsweise helixartigen Flussweges der Teilströme ausgebildet sind, insbesondere, dass der Drehsinn des helixartigen Flussweges des ersten Trennelementes entgegengesetzt zu dem Drehsinn des helixartigen Flussweges des zweiten Trennelementes ist.

4. Vorrichtung nach einem der Ansprüche 2 bis 3,
**dadurch gekennzeichnet,**
**dass** die Trennelemente (13a, 13b) als Wendelelemente ausgebildet sind, insbesondere, dass das Mischelement (8, 8') als Wendelmischer, vorzugsweise als statischer Wendelmischer ausgebildet ist.

5. Vorrichtung nach einem der Ansprüche 2 bis 4,
**dadurch gekennzeichnet,**
**dass** mindestens 3, bevorzugt mindestens 5 hintereinander angeordnete Trennelemente (13a, 13b) vorgesehen sind.

6. Vorrichtung nach einem der vorangegangenen Ansprüche,
**dadurch gekennzeichnet,**
**dass** im Leitungsweg zwischen Pumpe (1, 1a, 1b) und Mischelement (8, 8') keine Drosselstelle vorgesehen ist, insbesondere dass sich im Leitungsweg zwischen Pumpe (1, 1a, 1b) und Mischelement (8, 8') die Durchfluss-Querschnittsfläche nicht verringert, weiter bevorzugt, dass sich im Leitungsweg zwischen Pumpe (1, 1a, 1b) und einem Auslass (11) für den Milchschaum, welcher Auslass stromabwärts des Mischelementes angeordnet ist, die Durchfluss-Querschnittsfläche nicht verringert.

7. Vorrichtung nach einem der vorangegangenen Ansprüche,
**dadurch gekennzeichnet,**
**dass** die Pumpe (1, 1a, 1b) als Zahnradpumpe ausgebildet ist.

8. Vorrichtung nach einem der vorangegangenen Ansprüche,
**dadurch gekennzeichnet,**
**dass** zum wahlweisen Erzeugen von warmem oder kaltem Milchschaum zwei parallele Flusswegabschnitte (7a, 7b) vorgesehen sind, wobei in einem ersten der Flusswegabschnitte (7a) ein Durchlauferhitzer (9) angeordnet ist.

9. Vorrichtung nach Anspruch 8,
**dadurch gekennzeichnet,**
**dass** druckseitig der Pumpe (1) eine Verzweigung in die beiden parallelen Flusswegabschnitte vorgesehen ist, wobei zumindest in dem zweiten parallelen Flusswegabschnitt (7b) ohne Durchlauferhitzer (9) das Mischelement (8') angeordnet ist,
insbesondere,
**dass** weiterhin im ersten parallelen Flusswegabschnitt (7a) bevorzugt stromaufwärts des Durchlauferhitzers ein zweites Druckerhöhungselement angeordnet ist, vorzugsweise ausgebildet als ein zweites Mischelement (8).

10. Verfahren zum Erzeugen von Milchschaum, folgende Verfahrensschritte umfassend:
a. Fördern von Milch aus einem Behältnis mittels einer Pumpe (1, 1a, 1b);
b. Zuführen von Luft zu der Milch und
c. Durchleiten des Milch-Luftgemischs beziehungsweise des Milchschaums durch ein Druckerhöhungselement druckseitig der Pumpe (1, 1a, 1b);
wobei der Lufteinlass (4) saugseitig der Pumpe (1, 1a, 1b) angeordnet ist, und wobei als Druckerhöhungselement ein Mischelement (8, 8') verwendet wird, welches eine sich in Durchflussrichtung nicht verringernde Durchfluss-Querschnittsfläche aufweist, die eingangsseitig zumindest dem Leitungsquerschnitt einer zwischen Pumpe (1, 1a, 1b) und Mischelement (8, 8') angeordneten Verbindungsleitung entspricht.

11. Verfahren nach Anspruch 10,
**dadurch gekennzeichnet,**
**dass** der Milchschaum aus gekühlter Milch erzeugt und anschließend wahlweise erwärmt wird, insbesondere mittels eines Durchlauferhitzers (9).

12. Verfahren nach einem der vorangegangenen Ansprüche 10 oder 11, **dadurch gekennzeichnet,**
**dass** in dem Mischelement (8, 8') eine im Wesentlichen laminare Mischung erfolgt.

13. Verfahren nach einem der vorangegangenen Ansprüche 10 bis 12, **dadurch gekennzeichnet,**
**dass** druckseitig der Pumpe (1) das Milch-Luftgemisch wahlweise durch einen Durchlauferhitzer (9) geführt wird, wobei zumindest bei Erzeugen von kaltem Milchschaum unter Umgehung des Durchlauferhitzers das Milch-Luftgemisch durch das Mischelement (8, 8') geleitet wird.

## Claims

1. Device for generating milk foam,
having a pump (1, 1a, 1b) for conveying milk out of a container, an air inlet (4) and at least one pressure-increasing element, wherein the pressure-increasing element is arranged downstream of the pump and the air inlet is arranged upstream of the pressure-increasing element, the pressure-increasing element being in the form of a mixing element (8, 8') having a throughflow cross-sectional area which does not decrease in the throughflow direction,
**characterised in that**
the air inlet is arranged on the suction side of the pump (1, 1a, 1b), and the throughflow cross-sectional area of the mixing element (8, 8') on the input side corresponds at least to the line cross-section of a connecting line arranged between the pump (1, 1a, 1b) and the mixing element (8, 8').

2. Device according to claim 1,
**characterised in that**
the mixing element (8, 8') has at least two separating elements (13a, 13b) which are designed to co-operate with one another and are arranged one after the other in the flow path of a fluid flowing through in such a way that division into two or more sub-flows and mixing of the sub-flows of the fluid flowing through takes place;
especially,
in the flow path of the fluid flowing through there is arranged at least one first separating element (13a), which first separating element (13a) is designed to divide the fluid entering the mixing element (8, 8') into at least one first and one second sub-flow, and
in the flow path of the mixing element downstream of the first separating element there is arranged at least one second separating element (13b), which second separating element (13b) is designed to divide both the first and the second sub-flows of the first separating element (13a) and to co-operate with the first separating element (13a) in such a way that a portion of the first sub-flow of the first separating element (13a) is combined with a portion of the second sub-flow of the first separating element (13a) to form a new sub-flow.

3. Device according to claim 2,
**characterised in that**
the separating elements (13a, 13b) are additionally designed to form a flow path for the sub-flows which is, at least in some regions, helix-like; especially, the direction of rotation of the helix-like flow path of the first separating element is opposite to the direction of rotation of the helix-like flow path of the second separating element.

4. Device according to either one of claims 2 and 3,
**characterised in that**
the separating elements (13a, 13b) are in the form of helical elements; especially, the mixing element (8, 8') is in the form of a helical mixer, preferably in the form of a helical static mixer.

5. Device according to any one of claims 2 to 4,
**characterised in that**
at least 3, preferably at least 5, separating elements (13a, 13b) arranged one after the other are provided.

6. Device according to any one of the preceding claims,
**characterised in that**
no throttle point is provided in the route between the pump (1, 1a, 1b) and the mixing element (8, 8'); especially, in the route between the pump (1, 1a, 1b) and the mixing element (8, 8') the throughflow cross-sectional area does not decrease; more preferably, in the route between the pump (1, 1a, 1b) and an outlet (11) for the milk foam, which outlet is arranged downstream of the mixing element, the throughflow cross-sectional area does not decrease.

7. Device according to any one of the preceding claims,
**characterised in that**
the pump (1, 1a, 1b) is in the form of a gear pump.

8. Device according to any one of the preceding claims,
**characterised in that**
for the generation, as desired, of hot or cold milk foam there are provided two parallel flow path sections (7a, 7b), with a continuous-flow heater (9) being arranged in a first of the flow path sections (7a).

9. Device according to claim 8,
**characterised in that**
on the pressure side of the pump (1) a bifurcation into the two parallel flow path sections is provided, the mixing element (8') being arranged at least in the second parallel flow path section (7b) without the continuous-flow heater (9),
especially,
furthermore, a second pressure-increasing element, preferably in the form of a second mixing element (8), is arranged in the first parallel flow path section (7a), preferably upstream of the continuous-flow heater.

10. Method of generating milk foam, comprising the following method steps:
a. conveying milk out of a container by means of a pump (1, 1a, 1b);
b. supplying air to the milk and
c. passing the milk/air mixture or the milk foam through a pressure-increasing element on the pressure side of the pump (1, 1a, 1b);
wherein the air inlet (4) is arranged on the suction side of the pump (1, 1a, 1b), and
wherein as pressure-increasing element there is used a mixing element (8, 8') having a throughflow cross-sectional area which does not decrease in the throughflow direction and which, on the input side, corresponds at least to the line cross-section of a connecting line arranged between the pump (1, 1a, 1b) and the mixing element (8, 8').

11. Method according to claim 10,
**characterised in that**
the milk foam is generated from cooled milk and then optionally heated, especially by means of a continuous-flow heater (9).

12. Method according to either one of preceding claims 10 and 11,
**characterised in that**
substantially laminar mixing takes place in the mixing element (8, 8').

13. Method according to any one of preceding claims 10 to 12,
**characterised in that**
on the pressure side of the pump (1) the milk/air mixture is optionally guided through a continuous-flow heater (9), with the milk/air mixture, at least for the generation of cold milk foam, being passed through the mixing element (8, 8') with bypassing of the continuous-flow heater.

## Revendications

1. Dispositif de production de mousse de lait,
avec une pompe (1, 1a, 1b) pour véhiculer du lait à partir d'un récipient, avec une admission d'air (4)
et avec au moins un élément d'augmentation de pression, sachant que l'élément d'augmentation de pression est disposé en aval de la pompe et que l'admission d'air est disposée en amont de l'élément d'augmentation de pression, sachant que l'élément d'augmentation de pression est réalisé sous la forme d'un élément mélangeur (8, 8'), lequel présente une aire de section d'écoulement ne diminuant pas dans la direction d'écoulement,
**caractérisé en ce que** l'admission d'air est disposée du côté d'aspiration de la pompe (1, 1a, 1b), et l'aire de section d'écoulement de l'élément mélangeur (8, 8') correspond du côté d'entrée au moins à la section de conduite d'une conduite de liaison disposée entre la pompe (1, 1a, 1b) et l'élément mélangeur (8, 8').

2. Dispositif selon la revendication 1,
**caractérisé en ce que** l'élément mélangeur (8, 8') présente au moins deux éléments séparateurs (13a, 13b), lesquels sont disposés les uns à la suite des autres dans le trajet d'écoulement d'un fluide s'écoulant et sont réalisés pour coopérer de telle sorte qu'on obtient une division en deux ou plusieurs flux partiels et un mélangeage des flux partiels du fluide s'écoulant,
en particulier **en ce qu'**au moins un premier élément séparateur (13a) est disposé dans le trajet d'écoulement du fluide s'écoulant, lequel premier élément séparateur (13a) est réalisé pour diviser le fluide entrant dans l'élément mélangeur (8, 8') en au moins un premier et un deuxième flux partiels,
et **en ce qu'**au moins un deuxième élément séparateur (13b) est disposé en aval du premier élément séparateur dans le trajet d'écoulement de l'élément mélangeur, lequel deuxième élément séparateur (13b) est réalisé pour diviser à la fois le premier et le deuxième flux partiels du premier élément séparateur (13a), et est réalisé pour coopérer avec le premier élément séparateur (13a) de telle sorte qu'une partie du premier flux partiel du premier élément séparateur (13a) est réunie avec une partie du deuxième flux partiel du premier élément séparateur (13a) en un nouveau flux partiel.

3. Dispositif selon la revendication 2, **caractérisé en ce que** les éléments séparateurs (13a, 13b) sont en outre réalisés pour former un trajet d'écoulement des flux partiels au moins sectoriellement en hélice,
en particulier **en ce que** le sens de rotation du trajet d'écoulement en hélice du premier élément séparateur est opposé au sens de rotation du trajet d'écoulement en hélice du deuxième élément séparateur.

4. Dispositif selon l'une des revendications 2 à 3, **caractérisé en ce que** les éléments séparateurs (13a, 13b) sont réalisés sous forme d'éléments hélicoïdaux,
en particulier **en ce que** l'élément mélangeur (8, 8') est réalisé sous forme de mélangeur hélicoïdal, en particulier de mélangeur hélicoïdal statique.

5. Dispositif selon l'une des revendications 2 à 4, **caractérisé en ce qu'**il est prévu au moins 3 et de préférence au moins 5 éléments séparateurs (13a, 13b) disposés les uns à la suite des autres.

6. Dispositif selon l'une des revendications précédentes, **caractérisé en ce qu'**il n'est pas prévu de point d'étranglement dans le trajet de conduite entre la pompe (1, 1a, 1b) et l'élément mélangeur (8, 8'), en particulier en ce que l'aire de section d'écoulement ne diminue pas dans le trajet de conduite entre la pompe (1, 1a, 1b) et l'élément mélangeur (8, 8'), d'une manière encore plus préférée **en ce que** l'aire de section d'écoulement ne diminue pas dans le trajet de conduite entre la pompe (1, 1a, 1b) et une évacuation (11) pour la mousse de lait, laquelle évacuation est disposée en aval de l'élément mélangeur.

7. Dispositif selon l'une des revendications précédentes, **caractérisé en ce que** la pompe (1, 1a, 1b) est réalisée sous forme de pompe à engrenages.

8. Dispositif selon l'une des revendications précédentes, **caractérisé en ce que**, afin de produire au choix de la mousse de lait chaude ou froide, il est prévu deux tronçons parallèles (7a, 7b) de trajet d'écoulement, sachant qu'un réchauffeur instantané (9) est disposé dans un premier (7a) des tronçons de trajet d'écoulement.

9. Dispositif selon la revendication 8, **caractérisé en ce qu'**une bifurcation en les deux tronçons parallèles de trajet d'écoulement est prévue du côté de refoulement de la pompe (1), sachant que l'élément mélangeur (8') est disposé au moins dans le deuxième tronçon parallèle (7b) de trajet d'écoulement, dépourvu de réchauffeur instantané (9),
en particulier **en ce qu'**un deuxième élément d'augmentation de pression, de préférence réalisé sous la forme d'un deuxième élément mélangeur (8), est en outre disposé dans le premier tronçon parallèle (7a) de trajet d'écoulement, de préférence en amont du réchauffeur instantané.

10. Procédé de production de mousse de lait, comprenant les étapes de procédé suivantes :
a. véhiculer du lait à partir d'un récipient au moyen d'une pompe (1, 1a, 1b) ;
b. apporter de l'air au lait et
c. faire passer le mélange de lait et d'air ou encore la mousse de lait à travers un élément d'augmentation de pression du côté de refoulement de la pompe (1, 1a, 1b) ;
sachant que l'admission d'air (4) est disposée du côté d'aspiration de la pompe (1, 1a, 1b),
et sachant qu'on utilise comme élément d'augmentation de pression un élément mélangeur (8, 8'), lequel présente une aire de section d'écoulement ne diminuant pas dans la direction d'écoulement, qui correspond du côté d'entrée au moins à la section de conduite d'une conduite de liaison disposée entre la pompe (1, 1a, 1b) et l'élément mélangeur (8, 8').

11. Procédé selon la revendication 10, **caractérisé en ce que** la mousse de lait est produite à partir de lait refroidi puis est optionnellement réchauffée, en particulier au moyen d'un réchauffeur instantané (9).

12. Procédé selon l'une des revendications précédentes 10 ou 11, **caractérisé en ce qu'**un mélange essentiellement laminaire s'effectue dans l'élément mélangeur (8, 8').

13. Procédé selon l'une des revendications précédentes 10 à 12, **caractérisé en ce que**, du côté de refoulement de la pompe (1), le mélange de lait et d'air est dirigé optionnellement à travers un réchauffeur instantané (9), sachant qu'au moins lors de la production de mousse de lait froide, le mélange de lait et d'air est dirigé à travers l'élément mélangeur (8, 8') en contournant le réchauffeur instantané.
